# EUROPÄISCHE PATENTSCHRIFT

(11) **EP 1 226 012 B1**
(45) Veröffentlichungstag und Bekanntmachung des Hinweises auf die Patenterteilung: **14.05.2003**
(21) Anmeldenummer: 00971355.3
(22) Anmeldetag: 10.10.2000
(51) Int. Cl.: B29C 45/54, B29C 45/53

(54) **KOLBENEINSPRITZEINHEIT**
PISTON INJECTION UNIT
UNITE D'INJECTION A PISTON

(30) Priorität: 19.10.1999 DE 19950183
(43) Veröffentlichungstag der Anmeldung: 31.07.2002
(73) Patentinhaber: Krauss-Maffei Kunststofftechnik GmbH, 80997 München (DE)
(72) Erfinder: SCHULZE, Hans, Jürgen, 83064 Raubling (DE)
(74) Vertreter: Zollner, Richard
(86) Internationale Anmeldenummer: EP0009942
(87) Internationale Veröffentlichungsnummer: WO01028751

(56) Entgegenhaltungen:
- DE-A- 2 028 636
- DE-B- 1 529 962
- DE-B- 1 554 801
- DE-C- 622 239
- FR-A- 2 552 701
- PATENT ABSTRACTS OF JAPAN vol. 1997, no. 3, 31. März 1997 (1997-03-31) -& JP 08 300429 A (MITSUBISHI HEAVY IND LTD), 19. November 1996 (1996-11-19)

## Beschreibung

Die Erfindung bezieht sich auf eine Kolbeneinspritzeinheit für eine Spritzgießmaschine, nach dem Oberbegriff des Patentanspruchs 1, sowie auf ein Verfahren zum Betrieb einer solchen gemäß dem Oberbegriff des Patentanspruchs 6.

Bei einer Kolbeneinspritzeinheit dieser Art, wie sie in der DE 199 28 770 A1 vorbeschrieben ist, gelangt die in einer gesonderten Plastifiziereinheit, etwa einem Schneckenextruder, aufbereitete Spritzgießmasse beim Füllvorgang über die Masseeintrittsöffnung in einen auf der Rückseite des Einspritzkolbens liegenden, kolbenstangenseitigen Ringraum und von dort über ein im Einspritzkolben angeordnetes Rückschlagventil in den Kolbenvorraum, von wo sie beim Injektionshub des Einspritzkolbens mit einem den Befüllungsdruck um ein Vielfaches übersteigenden Einspritzdruck in die Formkavität des Spritzgießwerkzeugs ausgebracht wird. Durch eine derartige Strömungsführung der Spritzgießmasse wird ein hoher Durchspülungsgrad ohne unerwünschte Tot- oder Stauzonen erreicht und dadurch etwa bei einem Farb- oder Materialwechsel die Anzahl der Ausschußteile gering gehalten. Dabei besteht jedoch das Problem, daß der Förderstrom der Plastifiziereinheit nicht ausreicht, das sich beim Injektionshub des Einspritzkolbens rasch vergrößernde Ringraumvolumen aufzufüllen, und daher im Ringraum Unterdruckzustände auftreten, die zu einem Ausgasen leicht flüchtiger Bestandteile der Spritzgießmasse oder zu einem Ansaugen von Umgebungsluft über die Kolbenstangendichtungen führen, so daß in der Spritzgießmasse höchst störende Gaseinschlüsse entstehen, die dann in das Formteil miteingebracht werden und die Produktionsqualität erheblich beeinträchtigen.

Die DE 1 529 962 beschreibt eine Spritzgießmaschine, deren Zylinder im Bereich der Masseeinspeisung einen größeren Durchmesser aufweist, um eine Übertragungskammer zu schaffen, die den Einspritzkolben umgibt, der über seine gesamte Länge einen konstanten Durchmesser hat. In der Übertragungskammer umfasst ein Übertragungskolben den Einspritzkolben. Am Übergang von der Übertragungskammer zu einer vor dem Einspritzkolben liegenden Einspritzkammer ist in der Zylinderwand ein Rückschlagventil mit einem Übertragungskanal angeordnet. Im Bereich der Einspritzkammer ist der Zylinderdurchmesser verringert. Dies stellt eine sehr aufwendige Konstruktion dar, mit der ein guter Durchspülungsgrad der Spritzgießmaschine erreicht werden soll.

In der DE 20 28 636 wird eine Spritzgießmaschine zur Verarbeitung von plastifizierbaren Kunststoffen beschrieben, in der der Einspritzkolben gleichzeitig die Aufgabe eines Plastifizierkolbens erfüllt. Durch einen zweiten Kolben, den sogenannten Füllkolben, der die Kolbenstange des Plastifizierkolbens konzentrisch umgibt, ist die Möglichkeit der Dosierung des zu plastifizierenden Materials gegeben. In einem ersten Schritt wird das Material unter pulsierender Bewegung des Füllkolbens in einen durch den Plastifizierkolben und den Füllkolben begrenzten Ringraum gefüllt. Im Anschluß daran wird der Plastifizierkolben in Rotation um seine Kolbenstange versetzt und gleichzeitig zurückgezogen, wodurch das Material plastifiziert und am Kolbenkopf vorbei in eine vor dem Plastifizierkolben liegende Spritzkammer verdrängt wird. In einer gemeinsamen Vorschubbewegung von Plastifizierkolben und Füllkolben wird die Schmelze durch eine Spritzdüse in eine Form gespritzt. Der Verzicht auf eine eigene Plastifiziereinheit resultiert in einer Verlängerung des Einspritzzyklus, da während des Einspritzvorgangs keine Kunststoffschmelze erzeugt werden kann.

Aufgabe der Erfindung ist es, eine Kolbeneinspritzeinheit der eingangs genannten Art so auszubilden, daß unter Beibehalt einer ringraumseitigen Masse-Einspeisung eine Gasblasenbildung im Massestrompfad der Einspritzeinheit auf baulich einfache und sichere Weise unterbunden wird.

Weiterhin ist es Aufgabe der Erfindung, ein Verfahren zum Betrieb einer erfindungsgemäßen Kolbeneinspritzeinheit darzulegen, das verhindert, daß im Ringraum Unterdruckzustände auftreten können, die in der Spritzgießmasse Gaseinschlüsse entstehen lassen.

Diese Aufgaben werden erfindungsgemäß durch die im Patentanspruch 1 gekennzeichnete Kolbeneinspritzeinheit und das im Patentanspruch 6 zum Betrieb einer solchen gekennzeichnete Verfahren gelöst.

Erfindungsgemäß wird mit dem getrennt vom Einspritzkolben steuerbaren, den Ringraum begrenzenden Druckkolben eine sichere Rückstrom-Sperrfunktion unter Verzicht auf ein massestrombetätigtes, in den Einspritzkolben einbezogenes Rückschlagventil und zugleich eine vom Hub des Einspritzkolbens unabhängige Volumensteuerung des Ringraums erzielt, durch die sich Unterdruckzustände im Ringraum und damit das Risiko einer Gasblasenbildung in dem die Einspritzeinheit durchsetzenden Massestrom wirksam verhindern lassen.

Dabei ist der Einspritzkolben beim Rückhub des Druckkolbens derart gegenläufig zu diesem verfahrbar, daß die durch die Rückhubbewegung des Druckkolbens entstehende Volumenvergrößerung des Ringraums dem durch die Vorschubbewegung des Einspritzkolbens aus dem Kolbenvorraum über die Durchtrittspassage in den Ringraum verdrängten Masserückstrom entspricht.

In besonders bau- und abdichtgünstiger Ausgestaltung der Erfindung ist der Druckkolben nach Anspruch 2 vorzugsweise als zum Einspritzkolben koaxialer, mit einer zu diesem unterschiedlichen Hubgeschwindigkeit antreibbarer Ringkolben ausgebildet, welcher nach Anspruch 3 zweckmäßigerweise bis zur Anlage an die Rückseite des Einspritzkolbens verfahrbar angetrieben ist, um so beim Einspritzhub eine vollständige Entleerung des Ringraums zu erreichen, was sich besonders aus Gründen eines raschen Farb- oder Materialwechsels der Spritzgießmasse empfiehlt.

Nach Anspruch 4 schließlich ist der Druckkolben in weiterer, besonders bevorzugter Ausgestaltung der Erfindung nach Beendigung des Einspritzhubs bei arretiertem Einspritzkolben zur Erzeugung eines Nachdrucks hubbeweglich angetrieben, so daß der Einspritzdruck über die größere Kolbenfläche des Einspritzkolbens und der höhere Nachdruck über die kleinere Druckkolbenfläche erzeugt und durch die auf diese Weise abgestufte Druckerzeugung eine energiesparende Auslegung der beiden Kolbenantriebe ermöglicht wird.

Ansführungs beispiele der Erfindung ergeben sich aus der nachfolgenden, beispielsweisen Beschreibung in Verbindung mit den Zeichnungen. Diese zeigen in stark schematisierter Darstellung:

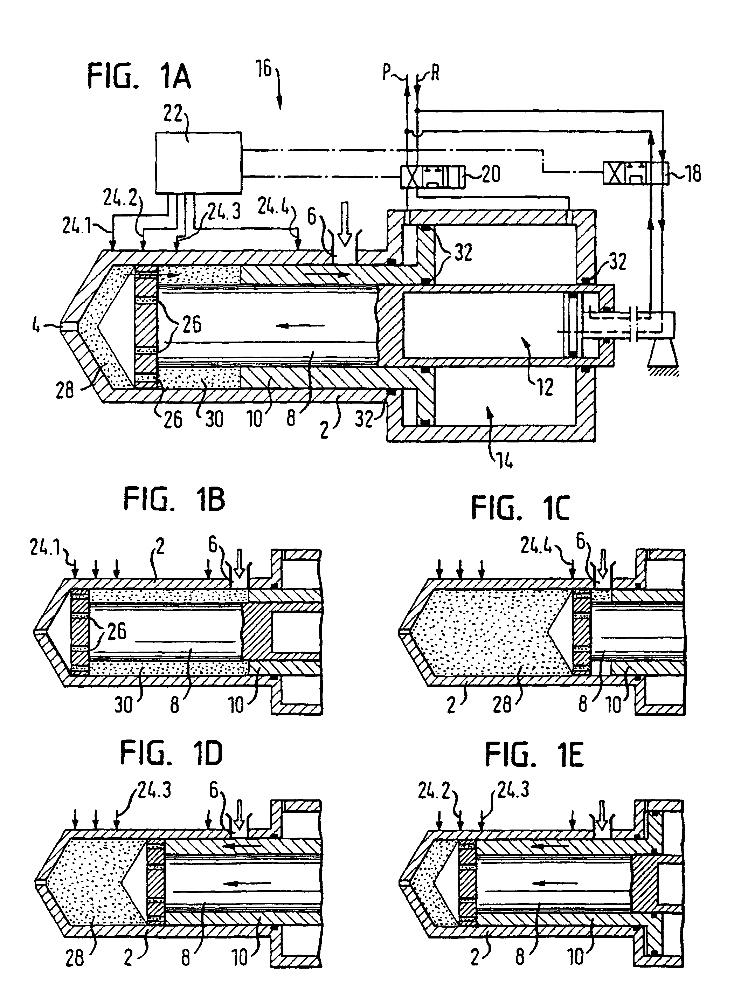

- **Fig. 1A-E**: einen Längs- und mehrere Teilschnitte eines ersten Ausführungsbeispiels einer erfindungsgemäßen Kolbeneinspritzeinheit in unterschiedlichen Arbeitsstellungen, nämlich bei teilweise (1A) und vollständig (1B) zurückgefahrenem Druckkolben, am Ende des Einfüllvorgangs (1C) sowie während und am Ende des Einspritzhubs (1D und 1E); und

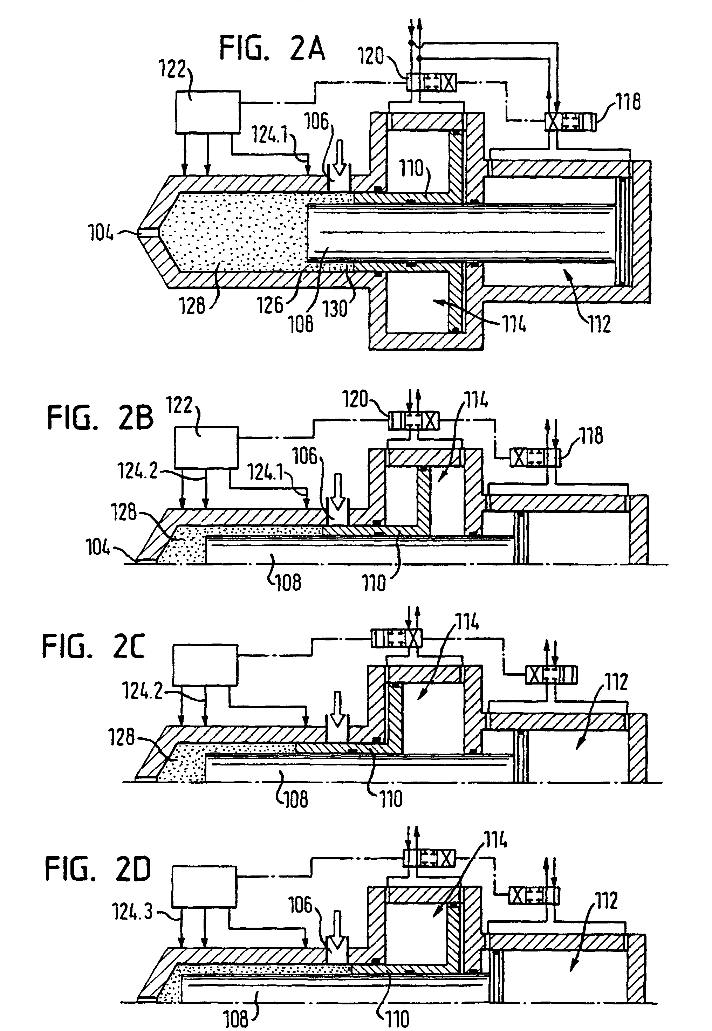

- **Fig. 2A-D**: eine der Fig. 1 entsprechende Darstellung eines zweiten Ausführungsbeispiels der Erfindung am Ende des Einfüllvorgangs (2A), am Ende der Einspritzphase (2B), nach Beendigung des Nachdrückvorgangs (2C) und zu Beginn der Einfüllphase (2D).

Die in Fig. 1 gezeigte Kolbeneinspritzeinheit enthält als Hauptbestandteile einen Einspritzzylinder 2 mit einer Einspritzöffnung 4 und einer von einem (nicht gezeigten) Extruder mit einer Kunststoffschmelze unter etwa 120-150 bar bedrückten Masseeintrittsöffnung 6, sowie einen im Zylinder 2 hubbeweglich angeordneten Einspritzkolben 8, einen unabhängig von diesem verfahrbaren Druckkolben 10 in Form eines den Einspritzkolben 8 koaxial umschließenden Druckkolbens 10 und zwei getrennt voneinander betätigbare, dem Kolben 8 bzw. 10 zugeordnete, hydraulische Kolbenantriebe 12 bzw. 14 einschließlich eines insgesamt mit 16 bezeichneten Steuersystems, bestehend aus einer hydraulischen Druckzufuhr- und Rücklaufleitung P bzw. R, zwei im Zuge der Hydraulikleitungen angeordneten, elektrisch betätigten Umschaltventilen 18, 20 für den Hydraulikantrieb 12 bzw. 14 und einer zentralen Steuereinheit 22 zur Betätigung der Umschaltventile 18, 20 in Abhängigkeit von der über Weggeber 24.1...24.4 abgetasteten Kolbenstellung.

Im Einspritzkolben 8 befinden sich in Umfangsrichtung verteilt mehrere Durchtrittspassagen 26, die einen in beiden Richtungen freien Massestrom zwischen dem Kolbenvorraum 28 und dem zwischen der Rückseite des Einspritzkolbens 8 und der Stirnfläche des Ringkolbens 10 begrenzten Ringraum 30 gestatten. Auf Seiten der Kolbenantriebe 12, 14 und des Einspritzzylinders 2 sind die einzelnen Kolbenkammern durch Dichtungen 32 voneinander getrennt.

Gemäß Fig. 1A befindet sich der Ringkolben 10 in der Rückhubphase, während der Einspritzkolben 8 in die vordere Endstellung vorgeschoben und dadurch Kunststoffschmelze aus dem Kolbenvorraum 28 über die Durchtrittspassagen 26 in den sich vergrößernden Ringraum 30 gedrückt wird. Dabei werden die Hubbewegungen der Kolben 8, 10 über die Kolbenantriebe 12, 14 derart gesteuert, daß der aus dem Kolbenvorraum 28 über die Durchtrittspassagen 26 verdrängte Masserückstrom der Volumenvergrößerung des Ringraums 30 entspricht und dadurch Unterdruckzustände in den Zylinderräumen 28, 30 mit Sicherheit unterbunden werden.

In der vorderen - anschlagbegrenzten - Hubendlage des Einspritzkolbens 8 (Fig. 1B) ist der Ringkolben 10 vollständig zurückgefahren und die Masseeintrittsöffnung 6 aufgesteuert. Infolge des Ansprechens des Weggebers 24.1 werden die Kolbenantriebe 12, 14 auf dem Wege über das Steuersystem 16 freigeschaltet und der Füllvorgang beginnt, bei dem die Kunststoffschmelze über die Masseeintrittsöffnung 6, den Ringraum 30 und die Durchtrittspassage 26 in den Kolbenvorraum 28 einströmt und der Einspritzkolben 8 unter der Fülldruckwirkung zurückgeschoben wird, bis der Kolbenvorraum 28 mit einer vorgegebenen Materialmenge befüllt ist und der Weggeber 24.4 anspricht (Fig. 1C), woraufhin die Einspritzphase mit einem Einspritzdruck von etwa 1500-2000 bar einsetzt, in der zunächst nur der Kolbenantrieb 14 aktiviert und dadurch der Ringkolben 10 bis zum Anschlag an der Rückseite des Einspritzkolbens 8 vorgefahren wird, so daß die Masseeintrittsöffnung 6 verschlossen und der Ringraum 30 entleert wird, und anschließend beide Kolben 8, 10 gleichzeitig unter der gemeinsamen Wirkung der Kolbenantriebe 12, 14 bis zum Ansprechen des Weggebers 24.3 vorgeschoben werden (Fig. 1D). In der anschließenden Nachdruckphase wird der gemeinsame Vorwärtshub der Kolben 8, 10 bis zum Weggeber 24.2 fortgesetzt, jedoch mit einer auf Seiten der Kolbenantriebe 12, 14 erhöhten Antriebskraft und dementsprechend unter einer nochmaligen Druckerhöhung im Kolbenvorraum 28 (Fig. 1E), woraufhin der Kolbenantrieb 14 des Ringkolbens 10 freigeschaltet wird und mit dem Rückhub des Ringkolbens 10 ein erneuter Arbeitszyklus beginnt.

Mit der beschriebenen Kolbenanordnung und -steuerung läßt sich in den massedurchströmten Kolbenräumen 28, 30 stets ein vorgegebener Mindestdruck von 1 bar oder mehr aufrecht erhalten. Hinzu kommt, daß aufgrund der großflächigen Abdichtung zwischen dem Ringkolben 10 und der Kolbenstange des Einspritzkolbens 8 und aufgrund der Anordnung der mit relativ niedrigem Druck beaufschlagten Masseeintrittsöffnung 6 stromaufwärts des Ringraums 30, über die in der Einspritz- und Nachdruckphase Masseleckagen aus dem Kolbenvor- und Ringraum 28, 30 abgebaut werden, eine wirksame Abdichtung der massedurchströmten Zylinderräume 28, 30 erzielt wird.

Die Kolbeneinspritzeinheit nach Fig. 2A bis D, wo die dem ersten Ausführungsbeispiel entsprechenden Komponenten durch ein um 100 erhöhtes Bezugszeichen gekennzeichnet sind, besitzt eine gegenüber der ersten Ausführungsform unterschiedliche Kolbenausbildung und -steuerung. Der Einspritzkolben 108 ist hier ein reiner Verdrängungskolben, und der Ringraum 130 steht mit dem Kolbenvorraum 128 über eine in Durchflußrichtung unbegrenzte Durchtrittspassage 126 in Verbindung. Ferner ist der Hubweg des Ringkolbens 110 wesentlich kleiner als der des Einspritzkolbens 108, und die beiden Kolbenantriebe 112, 114 besitzen eine unterschiedliche hydraulische Auslegung, wie dies in Fig. 2A durch die verschieden großen hydraulischen Druckangriffsflächen der Kolben 108, 110 angedeutet ist, um auf energiesparende Weise eine gestufte Drucksteuerung im Kolbenvorraum 128 während der Einspritz- und der Nachdruckphase zu erzielen.

In der in Fig. 2A gezeigten Arbeitsstellung befindet sich die Kolbeneinspritzeinheit am Ende des Füllvorgangs: der Einspritzkolben 108 ist bis zum Weggeber 124.1 und der Ringkolben 110 ist bis zum Endanschlag zurückgefahren, so daß die Masseeintrittsöffnung 106 freigesteuert und der Kolbenvor- und Ringraum 128, 130 mit einer durch die Lage des Weggebers 124.1 vorgegebenen Schmelzemenge befüllt ist. Mit dem Ansprechen des Weggebers 124.1 beginnt die Einspritzphase, in der zunächst die Masseeintrittsöffnung 106 durch einen Teilvorschub des Ringkolbens 110 zugesteuert und anschließend der Kolbenantrieb 112 aktiviert und dadurch der Einspritzkolben 108 bis zum Ansprechen des Weggebers 124.2 vorgeschoben wird (Fig. 2B), so daß eine durch die Hublänge des Einspritzkolbens 108 zwischen den Weggebern 124.1 und 124.2 vorgegebene Schmelzemenge mit einem Druck von etwa 1500 bar über die Einspritzöffnung 104 aus dem Kolbenvorraum 128 ausgetrieben wird. Der Ringkolben 110 ist dabei nicht am Einspritzvorgang beteiligt, sondern wirkt als reine Rückstromsperre, d.h. der Kolbenantrieb 114 ist in der Einspritzphase bis zum Ansprechen des Weggebers 124.2 hydraulisch arretiert.

In der anschließenden Nachdrückphase wird der Ringkolben 110 durch den nunmehr aktivierten Kolbenantrieb 114 in die in Fig. 2C dargestellte, vordere Hubendlage verfahren, während der Kolbenantrieb 112 des Einspritzkolbens 108 hydraulisch verriegelt ist. Hierdurch wird auf energetisch günstige Weise ein gegenüber dem Einspritzdruck nochmals erhöhter Nachdruck im Kolbenvorraum 128 erzeugt.

Zum Lösen der Rückstromsperre wird der Einspritzkolben 108 in die vordere Hubendlage, also bis zum Weggeber 124.3, vorgeschoben und dadurch der Ringkolben 110 unter der Wirkung der aus dem Kolbenvorraum 128 in den Ringraum 130 verdrängten Kunststoffschmelze bei freigängig oder auf einen geringfügigen Gegendruck geschaltetem Kolbenantrieb 114 bis zum Aufsteuern der Masseeintrittsöffnung 106 zurückgeschoben (Fig. 2D), woraufhin die Einspritzeinheit erneut befüllt und dabei der Einspritzkolben 108 bei gleichfalls freigängig oder auf einen geringfügigen Gegendruck geschaltetem Kolbenantrieb 112 in die in Fig. 2A gezeigte Ausgangsstellung zurückgeschoben wird.

Im übrigen ist die Bau- und Funktionsweise der Kolbeneinspritzeinheit nach Fig. 2 die gleiche wie beim ersten Ausführungsbeispiel.

## Patentansprüche

1. Kolbeneinspritzeinheit für eine Spritzgießmaschine, bei der die Masseeintrittsöffnung (6; 106) beim Füllvorgang mit Kunststoffschmelze über einen vom Einspritzkolben (8; 108) begrenzten Ringraum (30; 130) und eine an den Ringraum (30; 130) anschließende Durchtrittspassage (26; 126) mit dem Kolbenvorraum (28; 128) in Verbindung steht, beim Einspritzhub hingegen vom Kolbenvorraum (28; 128) durch eine zwischen diesem und der Masseeintrittsöffnung (6; 106) wirksame Rückstromsperre getrennt ist, wobei als Rückstromsperre ein den Ringraum (30; 130) begrenzender, unabhängig vom Einspritzkolben (8; 108) hubbeweglich angetriebener und die Masseeintrittsöffnung (6; 106) auf- und zusteuernder Druckkolben (10; 110) vorgesehen ist.
**dadurch gekennzeichnet, daß**
der Einspritzkolben (8; 108) beim Rückhub des Druckkolbens (10; 110) gegenläufig zu diesem verfahrbar und so ausgebildet ist, daß die durch die Rückhubbewegung des Druckkolbens (10; 110) entstehende Volumenvergrößerung des Ringraums (30; 130) zur Aufrechterhaltung eines vorgegebenen Mindestdrucks dem durch die Vorschubbewegung des Einspritzkolbens (8; 108) aus dem Kolbenvorraum (28; 128) über die Durchtrittspassage (26; 126) in den Ringraum (30; 130) verdrängten Masserückstrom entspricht.

2. Kolbeneinspritzeinheit nach Anspruch 1,
**dadurch gekennzeichnet, daß**
der Druckkolben (10; 110) als zum Einspritzkolben (8; 108) koaxialer, mit einer zum Einspritzkolben (8; 108) unterschiedlichen Hubgeschwindigkeit antreibbarer Ringkolben (10; 110) ausgebildet ist.

3. Kolbeneinspritzeinheit nach Anspruch 2,
**dadurch gekennzeichnet, daß**
der Ringkolben (10) bis zur Anlage an der Rückseite des Einspritzkolbens (8) verfahrbar angetrieben ist.

4. Kolbeneinspritzeinheit nach Anspruch 1 oder Anspruch 2,
**dadurch gekennzeichnet, daß**
der Druckkolben (110) nach Beendigung des Einspritzhubs bei arretiertem Einspritzkolben (108) zur Erzeugung eines Nachdrucks hubbeweglich angetrieben ist.

5. Kolbeneinspritzeinheit nach einem der vorhergehenden Ansprüche,
**dadurch gekennzeichnet, daß**
Weggeber (24.1...24.4; 124.1...124.3) zur Abtastung der Stellung des Einspritzkolbens (8; 108) vorgesehen sind.

6. Verfahren zum Betrieb einer Kolbeneinspritzeinheit für eine Spritzgießmaschine, umfassend eine Masseeintrittsöffnung (6; 106) für die Einfüllung von Kunststoffschmelze, einen Einspritzkolben (8; 108), einen von diesem begrenzten Ringraum, eine an den Ringraum (30; 130) anschließende, mit dem Kolbenvorraum (28; 128) in Verbindung stehende Durchtrittspassage (26; 126), und einen als Rückstromsperre den Ringraum (30; 130) begrenzender, unabhängig vom Einspritzkolben (8; 108) hubbeweglich angetriebenen und die Masseeintrittsöffnung (6; 106) auf- und zusteuernden Druckkolben (10; 110),
**gekennzeichnet durch die Schritte**
des Einfüllens, wobei die Kunststoffschmelze über die Masseeintrittsöffnung (6; 106), den Ringraum (30; 130) und die Durchtrittspassage (26; 126) in den Kolbenvorraum (28; 128) einströmt und der Einspritzkolben (8; 108) unter der Fülldruckwirkung zurückgeschoben wird, bis der Kolbenvorraum (28; 128) mit einer vorgegebenen Materialmenge befüllt ist,
des Einspritzens, wobei der Druckkolbens (10; 110) vorgefahren und so die Masseeintrittsöffnung (6; 106) verschlossen wird, und sodann der Einspritzkolben (8; 108) vorgeschoben wird,
und des Rückhubs, wobei der Einspritzkolben (8; 108) in die vordere Endstellung vorgeschoben wird und **dadurch** Kunststoffschmelze aus dem Kolbenvorraum (28; 128) über die Durchtrittspassage (26; 126) in den sich vergrößernden Ringraum (30; 130) gedrückt wird, wobei der aus dem Kolbenvorraum (28; 128) über die Durchtrittspassage (26; 126) verdrängte Masserückstrom der Volumenvergrößerung des Ringraums (30; 130) entspricht und **dadurch** Unterdruckzustände in den Zylinderräumen (28; 128; 30; 130) unterbunden werden.

## Claims

1. Piston injection unit for an injection moulding machine, in which the material inlet aperture (6; 106) is connected during the process of filling with molten plastic material to the piston ante-chamber (28; 128) via an annular space (30; 130) delimited by the injection piston (8; 108) and a passage (26; 126) connected to the annular space (30; 130), but is separated from the piston ante-chamber (28; 128) on the injection stroke by a non-return valve acting between the ante-chamber and the material inlet aperture (6; 106), a pressure piston (10; 110) which delimits the annular apace (30; 130), is driven stroke-movement-wise independently of the injection piston (8; 108) and opens and closes the material inlet aperture (6; 106) being provided as a non-return valve, **characterised in that** the injection piston (8; 108) can travel in the opposite direction to the pressure piston (10; 110) on the reverse stroke of the latter and is formed in such a way that the enlargement in the volume of the annular space (30; 130) caused by the reverse stroke movement of the pressure piston (10; 110) for maintaining a preset minimum pressure corresponds to the reverse material flow displaced by the forward movement of the injection piston (8; 108) from the piston ante-chamber (28; 128) via the passage (26; 126) into the annular space (30; 130).

2. Piston injection unit according to claim 1, **characterised in that** the pressure piston (10; 110) is formed as an annular piston (10; 110) coaxial to the injection piston (8; 108) and drivable at a different stroke velocity to the injection piston (8; 108).

3. Piston injection unit according to claim 2, **characterised in that** the annular piston (10) is driven so as to be capable of travelling to the rest on the rear side of the injection piston (8).

4. Piston injection unit according to claim 1 or claim 2, **characterised in that** the pressure piston (110), following completion of the injection stroke with the injection piston (108) stopped, is driven with a stroke movement to produce a holding pressure.

5. Piston injection unit according to one of the preceding claims, **characterised in that** path sensors (24.1...24.4; 124.1...124.3) are provided to scan the position of the injection piston (8; 108)

6. Method for operating a piston injection unit for an injection moulding machine, comprising a material inlet aperture (6; 106) for filling with molten plastic material, an injection piston (8; 108), an annular space delimited by the latter, a passage connected to the annular space (30; 130) and connected to the piston ante-chamber (28; 128), and a pressure piston (10; 110) functioning as a non-return valve delimiting the annular space (30; 130), driven with a stroke movement independently of the injection piston (8; 108) and opening and closing the material inlet aperture (6; 106), **characterised by** the steps of filling, the molten plastic material flowing via the material inlet aperture (6; 106), the annular space (30; 130) and the passage (26; 126) into the piston ante-chamber (28; 128) and the injection piston (8; 108) being pushed backwards under the effect of the filling pressure, until the piston ante-chamber (28; 128) has been filled with a predetermined quantity of material, of injecting, the pressure piston (10; 110) being moved forward and the material inlet aperture (6; 106) thus being closed, and then the injection piston (8; 108) being pushed forwards, and of the reverse stroke, the injection piston (8; 108) being pushed forwards into the forward end position and thereby molten plastic material being pressed out of the piston ante-chamber (28; 128) via the passage (26; 126) into the annular space (30; 130), which is increasing in size, the reverse material flow displaced from the piston ante-chamber (28; 128) via the passage (26; 126) corresponding to the increase in the volume of the annular space (30; 130) and negative pressure conditions in the cylinder spaces (28; 128; 30; 130) thereby being prevented.

## Revendications

1. Unité d'injection à pistons pour une machine de moulage par injection, dans laquelle, pendant le processus de remplissage avec la matière plastique en fusion, l'orifice d'admission de la matière (6 ; 106) communique avec la chambre avant du piston (28 ; 128) par l'intermédiaire d'une chambre annulaire (30 ; 130), délimitée par le piston d'injection (8 ; 108), et d'un orifice de passage (26 ; 126) adjacent à la chambre annulaire (30 ; 130), alors que, pendant une course d'injection, il est séparé de la chambre avant du piston (28 ; 128) par une barrière anti-reflux active entre la chambre avant du piston précitée et l'orifice d'admission de la matière (6 ; 106), la barrière anti-reflux étant formée par un piston de pression (10 ; 110) délimitant la chambre annulaire (30 ; 130), actionné pour effectuer une course indépendamment du piston d'injection (8 ; 108) et commandant l'ouverture et la fermeture de l'orifice d'admission de la matière (6 ; 106), **caractérisée en ce que** le piston d'injection (8 ; 108) pendant la course de retour du piston de pression (10 ; 110) se déplace dans le sens contraire de celui-ci et est conçu de telle sorte que l'augmentation de volume de la chambre annulaire (30 ; 130), produite par la course de retour du piston de pression (10 ; 110) et destinée à maintenir une pression minimale prédéfinie, correspond au flux de retour de la matière refoulée par la course vers l'avant du piston d'injection (8 ; 108), hors de la chambre avant du piston (28 ; 128) vers la chambre annulaire (30 ; 130), par l'intermédiaire de l'orifice de passage (26 ; 126).

2. Unité d'injection à pistons selon la revendication 1, **caractérisée en ce que** le piston de pression (10 ; 110) est conçu sous forme de piston annulaire (10 ; 110), agencé coaxialement au piston d'injection (8 ; 108) et pouvant être actionné avec une vitesse différente de celle du piston d'injection (8 ; 108).

3. Unité d'injection à pistons selon la revendication 2, **caractérisée en ce que** le piston annulaire (10) est actionné de manière à se déplacer pour venir en appui contre la face arrière du piston d'injection (8).

4. Unité d'injection à pistons selon la revendication 1 ou 2, **caractérisée en ce que**, à la fin de course d'injection, lorsque le piston d'injection (108) est immobilisé, le piston de pression (110) est actionné pour effectuer une course destinée à générer une pression ultérieure.

5. Unité d'injection à pistons selon une des revendications précédentes, **caractérisée en ce que** des capteurs de déplacement (24.1 ... 24.2 ; 124.1 ... 124.2) sont prévus pour détecter la position du piston d'injection (8 ; 108).

6. Procédé destiné à exploiter une unité d'injection à pistons pour une machine de moulage par injection, comprenant un orifice d'admission de la matière (6 ; 106), par lequel entre la matière plastique en fusion, un piston d'injection (8 ; 108), une chambre annulaire (30 ; 130) délimitée par celui-ci, un orifice de passage (26 ; 126), adjacent à la chambre annulaire (30 ; 130) et communiquant avec la chambre avant du piston (28 ; 128), et un piston de pression (10 ; 110), formant une barrière anti-reflux, délimitant la chambre annulaire (30 ; 130), actionné pour effectuer une course indépendamment du piston d'injection (8 ; 108) et commandant l'ouverture et la fermeture de l'orifice d'admission de la matière (6 ; 106), **caractérisé par** les étapes suivantes :
- une étape d'admission, dans laquelle la matière plastique en fusion afflue dans la chambre avant du piston (28 ; 128) en passant par l'orifice d'admission de la matière (6 ; 106), la chambre annulaire (30 ; 130) et l'orifice de passage (26 ; 126), puis le piston d'injection (8 ; 108) se déplace vers l'arrière sous l'effet de la pression de remplissage, jusqu'à ce que la chambre avant du piston (28 ; 128) soit remplie avec une quantité de matière prédéfinie ;
- une étape d'injection, dans laquelle le piston de pression (10 ; 110) se déplace vers l'avant et obture ainsi l'orifice d'admission de la matière (6 ; 106), et ensuite, le piston d'injection (8 ; 108) se déplace vers l'avant ;
- et une étape de course de retour, dans laquelle le piston d'injection (8 ; 108) se déplace vers l'avant dans la position finale avant et, de ce fait, la matière plastique en fusion est poussée hors de la chambre avant du piston (28 ; 128) par l'intermédiaire de l'orifice de passage (26 ; 126) vers la chambre annulaire (30 ; 130) qui s'agrandit, sachant que le flux retour de la matière, refoulée hors de la chambre avant du piston (28 ; 128) par l'intermédiaire de l'orifice de passage (26 ; 126), correspond à l'augmentation de volume de la chambre annulaire (30 ; 130) et, de ce fait, des états de dépression sont supprimés dans les chambres du cylindre (28 ; 128 ; 30 ; 130).
